# EUROPEAN PATENT APPLICATION

(11) **EP 2 187 350 A1**
(43) Date of publication of application: **19.05.2010**
(21) Application number: 08305776.0
(22) Date of filing: 05.11.2008
(51) Int. Cl.: G06T 7/00, H04N 17/00

(54) **Method and device for assessing image quality degradation**

(71) Applicant: Thomson Licensing, 92443 Issy-les-Moulineaux Cedex (FR)
(72) Inventor: Xu, Feng, Beijing 100085 (CN); Gu, Xiadong, Beijing 100085 (CN); Chen, Zhibo, Beijing 100085 (CN); Liu, Debing, Beijing 100085 (CN)
(74) Representative: Rittner, Karsten

(57) **Abstract**

The invention relates to a method for assessing image quality degradation and to a device (DEC) therefore.

Said device comprises means (INP) for receiving distorted image data, means (INP) for receiving side information about at least one feature in respective undistorted image data, means (VAA) for extracting at least one respective feature from the distorted image data, means (VAA) for generating further information about the at least one extracted feature and means for assessing (PMOS) the quality degradation using the generated information and the received side information wherein the at least one feature and the at least one extracted feature are artefacts of a same type.

The key technique of the invention is the type of metadata inserted into the video stream. By this additional information about artefacts in the undistorted image, problems of video quality measurement induced by content diversity, codec difference, and configuration difference, can be solved.

## Description

### Background

The invention relates to a method for assessing image quality degradation and to a device therefore.

Images are subjected to various distortions on their way from a capturing device to a user's eye. These various distortions comprise, among others, lossy compression, packet loss and noise.

Assessment of quality degradation induced by said various distortions are of importance for the evaluation of compression schemes or transmission paths, for instance.

A direct and precise assessment of quality degradation is achieved by help of human assessment of the distorted image and of the undistorted image. Several individuals assess the images and assign a score to it, from which a mean observer score (MOS) is formed. But, this approach is expensive and time-consuming. Thus, objective quality assessment methods and devices which approximate subjective quality assessment are proposed.

Subjective quality assessment depends on factors like the saliency of distorted image regions and of undistorted image regions, the structure of image content of the distorted image region, duration of the distortion and change of the distortion over time, if the image is part of a video.

These dependencies are not yet fully understood.

Therefore, there is a remaining uncertainty about which image parameters shall be used in objective quality assessment for yielding a close approximation of subjective quality assessment.

### Invention

The inventors propose the use of artefacts. That is, a method and a device for assessing image quality degradation is proposed, said device comprising the means of claim 1 and said method comprising the steps of claim 5.

Said device comprises means for receiving distorted image data, means for receiving side information about at least one feature in respective undistorted image data, means for extracting at least one respective feature from the distorted image data, means for generating further information about the at least one extracted feature and means for assessing the quality degradation using the generated information and the received side information wherein the at least one feature and the at least one extracted feature are artefacts of a same type.

The key technique of the invention is the type of side information or metadata received in the video stream. By provision of additional information about artefacts in the undistorted image, problems of video quality measurement induced by content diversity, codec difference, and configuration difference, can be solved. Quality degradation assessment based on artefacts has been found to be independent from image content, codec or configuration.

In an embodiment, said received side information and said generated information each comprises at least one degree of blurring and said device further comprises means for determining at least one degree of change of blurring.

In a further embodiment, said at least one degree of blurring is at least one average edge width and said at least one degree of change of blurring is a degree of change of average width of horizontal edges and/or a degree of change of average width of vertical edges.

And/Or, said received side information and said generated information each may comprise at least one average blockiness. Then, said device may further comprise means for determining at least one degree of change of average blockiness.

Optionally, said at least one degree of change is a degree of change of average degree of blockiness of horizontal block boundaries and/or a degree of change of average degree of blockiness of vertical block boundaries.

Another option is the prediction of a quality degradation score using the at least one determined degree of change.

The invention is useful for improvement of video sequences, also. If the image data represent a key frame of a video sequence, then the predicted quality degradation score may be used for improving the quality of further frames in the video sequence.

The invention further proposes a method and a device for encoding image data according to claim 12 and 13.

Said encoding method comprises the steps of extracting at least one feature from the image data, generating information about the at least one extracted feature and encoding the information as side information of said image data wherein the at least one extracted feature is an artefact.

Image data encoded as such is suited for the inventive quality assessment method.

The side information may comprise an average width of horizontal edges, an average width of vertical edges, an average degree of blockiness of horizontal block boundaries and/or an average degree of blockiness of vertical block boundaries.

It may be carried by a storage medium or signal wherein said encoded side information represents at least one of: an average width of horizontal edges in the image data, an average width of vertical edges in the image data, an average degree of blockiness of horizontal block boundaries in the image data and an average degree of blockiness of vertical block boundaries in the image data.

### Drawings

Exemplary embodiments of the invention are illustrated in the drawings and are explained in more detail in the following description.

In the figures:
- Fig. 1: depicts a first exemplary system comprising a first exemplary embodiment of the inventive encoder and a first exemplary embodiment of the inventive decoder,
- Fig. 2: depicts a second exemplary system comprising a second exemplary embodiment of the inventive encoder and a second exemplary embodiment of the inventive decoder
- Fig. 3: depicts a third exemplary system comprising a third exemplary embodiment of the inventive encoder and a third exemplary embodiment of the inventive decoder and
- Fig. 4: depicts an exemplary embodiment of a video artefact analyser.

### Exemplary embodiments

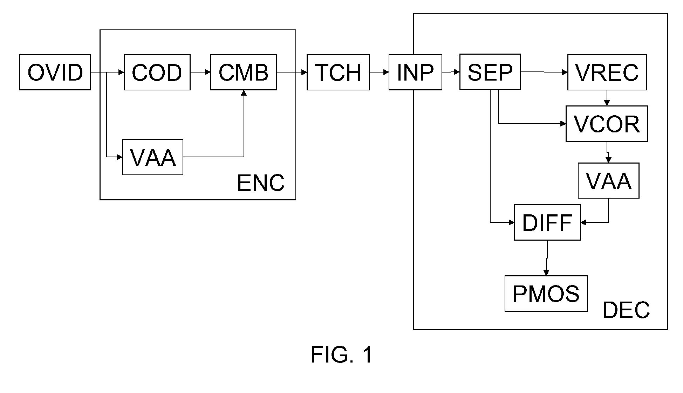

A first exemplary system comprising a first exemplary embodiment of the inventive encoder ENC and a first exemplary embodiment of the inventive decoder DEC is depicted in fig. 1.

The encoder ENC receives original video OVID as input and provides the original video OVID to an artefact analyser VAA which determines original video artefact information. The original video OVID is further provided to a coding device COD which encodes the original video OVID according to an encoding standard like MPEG4, for instance. The coding device COD may take properties of a transmission channel TCH into account.

The original video artefact information is quantized and combined with or embedded in the encoded video in a combiner CMB. The output of the combiner CMB is output to transmission channel TCH transmitting the combination of encoded video and original video artefact information to a decoder DEC which receives said combination as input.

The decoder DEC comprises a separator SEP which separates the original video artefact information from the encoded video.

The encoded video is provided to a reconstruction device VREC which reconstructs the video from the received encoded video.

The reconstructed video and the separated original video artefact information are inputted to a video correcting device VCORR which corrects the reconstructed video based on the separated original video artefact information.

The corrected video is input to a further artefact analyser VAA which equals in function the artefact analyser VAA comprised in the encoder ENC. The further artefact analyser VAA determines artefact information about the distorted video.

Thus, artefact information about the original video and corresponding artefact information about the distorted video are available at decoder side for quality score prediction.

Said distorted video artefact information is compared with the received original video artefact information in device DIFF which determines a difference between the distorted video artefact information and the received original video artefact information.

The determined difference is input to a mean observer score predictor PMOS predicting a mean observer score which would have been assigned to the reconstructed video in a subjective quality assessment.

The predictions of the mean observer score predictor PMOS result from training of a predicting machine with original and distorted training videos for which subjective quality assessments are available.

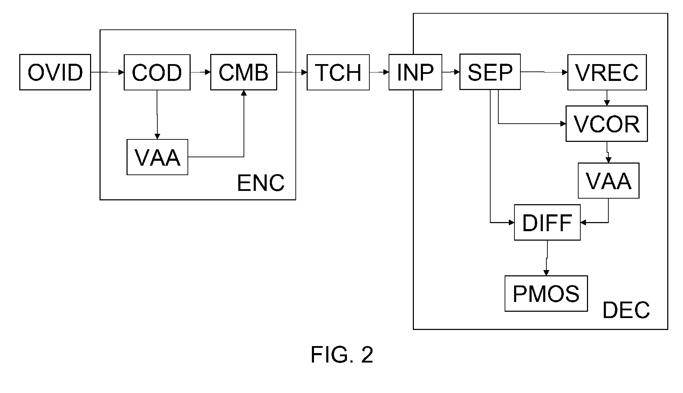

The second exemplary system depicted in fig. 2 differs from the first exemplary system in that, instead of the original video OVID, another reconstructed video available from the coding device COD is used by the video artefact analyser VAA for determination of the original video artefact information.

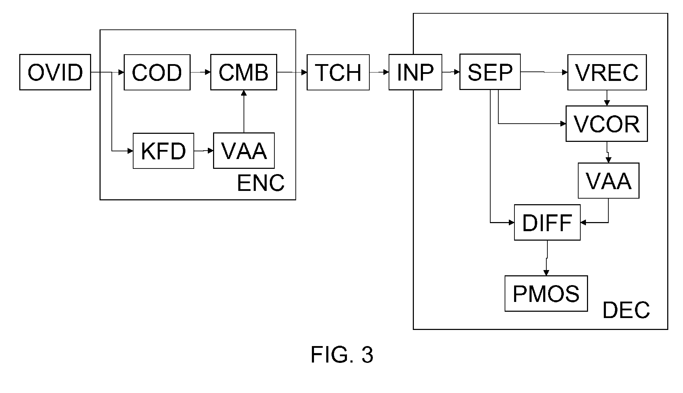

The third exemplary system depicted in fig. 3 differs from the first exemplary system in that, a key frame detector KFD provides key frames of the original video OVID only to video artefact analyser VAA while non-key frames of the original video OVID are not analysed. So only artefact information of key frames needs to be transmitted which results in a lowered additional data rate.

The third exemplary embodiment exploits the assumption that the original video is stationary at temporal axis. Then, all the frames within a shot use the information from the key frame.

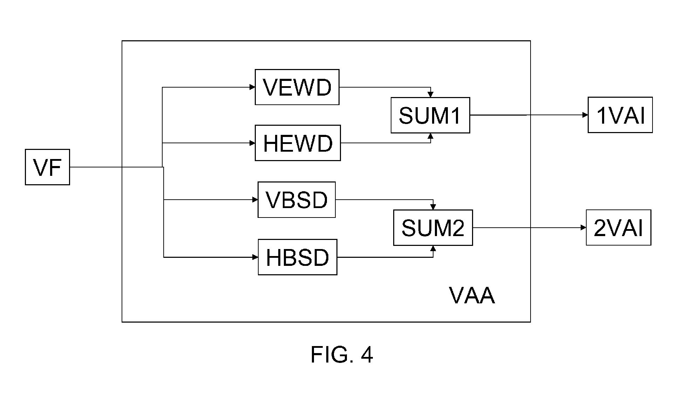

An exemplary embodiment of the video artefact analyser VAA is depicted in fig. 4 in more detail.

The video artefact analyser VAA receives a video frame VF as input and outputs first and second video artefact information 1VAI, 2VAI.

The video artefact analyser VAA comprises an edge width detector VEWD for vertical edges and a further edge width detector HEWD for horizontal edges.

The edge width detector VEWD determines an average vertical edge width as follows: First, video frame VF is filtered by a horizontal Sobel operator and vertical edges are identified in the horizontally filtered frame. Then, a local edge width is determined for each vertical edge pixel. The local edge width is determined as a distance in pixels between nearest local extremes on opposite sides in horizontal direction. An average of all the local edge widths is formed resulting in the average vertical edge width which is output to a summing device SUM1.

The further edge width detector HEWD for horizontal edges determines and outputs an average horizontal edge width to the summing device SUM1 in a corresponding way.

Then, the summing device SUM determines a -possibly weighted- sum of the average horizontal edge width and the average vertical edge width. This results in the first video artefact information 1VAI which is outputted by video artefact analyser VAA.

The video artefact analyser VAA further comprises a boundary significance detector VBSD for vertical block boundaries and a further boundary significance detector HBSD for horizontal block boundaries.

The boundary significance detector VBSD determines an average significance of vertical block boundaries as follows: First, vertical block boundaries are identified in the video frame VF. Then, a local significance per row is determined for each vertical boundary. An average of all the local significances is formed resulting in the average significance of vertical block boundaries which is output to a further summing device SUM2.

The further boundary significance detector HBSD determines and outputs the average significance of horizontal block boundaries to the further summing device SUM2 in a corresponding way.

Then, the further summing device SUM2 determines a - possibly weighted- sum of the average significance of horizontal block boundaries and the average significance of vertical block boundaries. This results in the second video artefact information 2VAI which is further outputted by video artefact analyser VAA.

Thus blurring and blockiness of video frame VF are represented by two scalars.

Local significance of a given vertical block boundary in a given row is determined as follows whereby a left block is horizontally adjacent to a right block in said given row:

A left block's pixel in the given row which is adjacent to a right block's pixel in said given row, i.e. said left block's pixel is the right-most pixel of the left block in said given row, is compared with said adjacent right block's pixel, i.e. the left-most pixel of said right block in said given row. This results in a first difference.

Further, for each pair of horizontally neighbouring pixels in said given row of the left block an adjuvant difference is determined. The same is done for each pair of horizontally neighbouring pixels in said given row of the right block. The determined adjuvant differences are averaged resulting in a second difference.

Then, the local significance of said given vertical block boundary in said given row is determined as the ratio of said first difference divided by said second difference.

For evaluation of a codec, artefacts may be detected in original video and in a reconstruction of encoded video. For evaluation of a transmission channel, artefacts may be detected in the reconstructed video and in a reconstruction based on said encoded video as received via said transmission channel. And for evaluation of overall quality degradation, artefacts may be detected in the original video and in said reconstruction based on said encoded video as received via said transmission channel.

The exemplary embodiment described is based on blurring and blockiness. But, the invention can be used with other or further types of artefacts, also. One or several scalar parameters characterizing a type of artefacts in original videos are inserted into the video stream as metadata, so that video quality assessment improvement is achieved at low additional cost.

The proposed scheme not only allows for content-, codec- and configuration-independent quality degradation assessment but also for assessment of pre-transmission quality of original videos due to the metadata describing artefacts of original videos prior to transmission.

## Claims

1. Device (DEC) for assessing image quality degradation, said device comprising
- means (INP) for receiving distorted image data,
- means (INP) for receiving information about at least one feature in respective undistorted image data,
- means (VAA) for extracting at least one respective feature from the distorted image data,
- means (VAA) for generating further information about the at least one extracted feature and
- means (DIFF, PMOS) for assessing the quality degradation using the generated information and the received information wherein
- the at least one feature and the at least one extracted feature are artefacts of a same type.

2. Device according to claim 1, wherein
- said received information and said generated respective information each comprises at least one average edge width and
- said device further comprises means (DIFF) for determining at least one degree of change of average edge width.

3. Device according to claim 1 or 2, wherein
- said received information and said generated respective information each comprises at least one average degree of blockiness and
- said device further comprises means (DIFF) for determining at least one degree of change of average degree of blockiness.

4. Device according to claim 2 or 3, further comprising
- means (PMOS) for predicting a quality degradation score using the at least one determined degree of change.

5. Method for assessing image quality degradation, said method comprising the steps of
- receiving distorted image data,
- receiving side information about at least one feature in respective undistorted image data,
- extracting at least one respective feature from the distorted image data,
- generating further information about the at least one extracted feature and
- assessing the quality degradation using the generated information and the received side information wherein
- the at least one feature and the at least one extracted feature are artefacts of a same type.

6. Method according to claim 5, wherein
- said received side information and said generated information each comprises at least one degree of blurring and
- said method further comprises determining at least one degree of change of blurring.

7. Method according to claim 6, wherein
- said at least one degree of blurring is at least one average edge width and
- said at least one degree of change of blurring is a degree of change of average width of horizontal edges and/or a degree of change of average width of vertical edges.

8. Method according to one of the claims 5-7, wherein
- said received side information and said generated information each comprises at least one average blockiness and
- said method further comprises determining at least one degree of change of average blockiness.

9. Method according to claim 8, wherein
- said at least one degree of change is a degree of change of average degree of blockiness of horizontal block boundaries and/or a degree of change of average degree of blockiness of vertical block boundaries.

10. Method according to one of the claims 6-9, further comprising
- predicting a quality degradation score using the at least one determined degree of change.

11. Method according to claim 10, wherein
- the image data represent a key frame of a video sequence and
- the predicted quality degradation score is used for improving the quality of further frames in the video sequence.

12. Method for encoding image data, said method comprising the steps of
- extracting at least one feature from the image data,
- generating information about the at least one extracted feature and
- encoding the information as side information of said image data wherein
- the at least one extracted feature is an artefact.

13. Device (ENC) for encoding image data, said device comprising
- means (VAA) for extracting at least one feature from the image data,
- means (VAA) for generating information about the at least one extracted feature and
- means (CMB) for encoding the information as side information of said image data wherein
- the at least one extracted feature is an artefact.

14. Method according to claim 12 or device according to claim 13, wherein
- said generated information comprises an average width of horizontal edges, an average width of vertical edges, an average degree of blockiness of horizontal block boundaries and/or an average degree of blockiness of vertical block boundaries.

15. Storage medium or signal carrying encoded image data, further carrying encoded side information wherein said encoded side information represents at least one of:
- an average width of horizontal edges in the image data,
- an average width of vertical edges in the image data,
- an average degree of blockiness of horizontal block boundaries in the image data and
- an average degree of blockiness of vertical block boundaries in the image data.
